# EUROPÄISCHE PATENTANMELDUNG

(11) **EP 1 677 085 A2**
(43) Veröffentlichungstag der Anmeldung: **05.07.2006**
(21) Anmeldenummer: 05405714.6
(22) Anmeldetag: 21.12.2005
(51) Int. Cl.: G01F 23/26, D06F 39/08, C08G 61/12

(54) **Kapazitiver Niveau-Sensor**

(30) Priorität: 31.12.2004 CH 217004
(71) Anmelder: Moonhaven LLC, Cheyenne, WY 82001 (US)
(72) Erfinder: Matea, Stelian Marius, Arad (RO)
(74) Vertreter: Gaggini, Carlo

(57) **Zusammenfassung**

Die vorliegende Erfindung betrifft einen kapazitiven Niveau-Sensor zur Verwendung beispielsweise in Geschirrwäschem oder in Waschmaschinen in Modellen für den Haushalt oder für professionellen Gebrauch.

Der Flüssigkeitsstand in einem Behälter (1) wird mit Hilfe eines Sensors gemessen, der mindestens zwei Kondensatoren (7, 7') aufweist, in welchem die zu messende Flüssigkeit (2) elektrisch leitfähig ist, wie alle wässerigen Waschflüssigkeiten für Geschirr und für Textilien, und daher die Funktion einer der Kondensatorplatten (6) der mindestens zwei Kondensatoren (7, 7') übernehmen kann, während die andere Kondensatorplatte als metallische Elektrode (5, 5', .... 5") ausgebildet ist.

Die Neuheit der vorliegenden Erfindung beruht darauf, dass die Flüssigkeit, normalerweise in Form verunreinigten Waschwassers, das nicht als Dielektrikum - wie gemäss dem Stand der Technik - verwendet wird, sondern als eine Flüssigkeit, die eine genügende elektrische Leitfähigkeit aufweist, um die eine Kondensatorplatte eines Kondensators zu bilden.

Der erfindungsgemässe Sensor ist robust, da er keinerlei bewegliche Teile aufweist, widerstandsfähig gegen Säuren, und einfach in seiner Konstruktion sowie kostengünstig.

## Beschreibung

Die vorliegende Erfindung betrifft einen kapazitiven Niveau-Sensor gemäss dem Oberbegriff des Patentanspruchs 1.

Das Problem, welches die vorliegende Erfindung zu lösen sucht, ist vor allem auf dem Gebiet elektrischer Haushaltapparate bekannt, sei es bei Geräten im Haushalt oder bei industriellen bzw. professionellen Geräten, genauer gesagt im Bereich der Geschirrspüler und der Waschmaschinen.

In solchen Maschinen wird Waschwasser verwendet, das naturgemäss verschiedenste Verunreinigungen enthält, entsprechend den Maschinenfunktionen (Speisereste, Gewebeverunreinigungen) und Tenside wie beispielsweise Seifen, und immer eine relativ hohe elektrische Leitfähigkeit aufweist. Bekannt ist, dass die Dielektrizitätskonstante von Wasser nicht konstant ist, sondern von den darin enthaltenen Verunreinigungen abhängig ist.

Die vorliegende Erfindung macht von dieser Leitfähigkeits-Eigenschaft des schmutzigen Wassers in Waschmaschinen und Geschirrspülern Gebrauch, um einen Sensor innovativer Konzeption für den Wasserstand im Waschbehälter schaffen.

Das Hauptproblem, das es zu lösen gilt, liegt darin, einen Sensor ohne bewegliche oder verformbare Teile zu konstruieren, wie sie heute in handelsüblichen und allgemein verwendeten Maschinen für diesen Zweck gebraucht werden, da solche Teile dazu neigen, wegen der normalerweise im Waschwasser enthaltenen Rückstände zu verstopfen. Ferner muss der Fühlerbereich des Niveau-Fühlers widerstandsfähig sein gegen Säuren im Waschwasser und muss, mindestens in Geschirrwaschmaschinen, den Aufprall eines Löffels ertragen, der während des Waschvorgangs in das Waschgefäss fallen kann. Dabei handelt es sich um einen Test, dem die heute gebräuchlichen Sensoren unterworfen werden.

Die heute gemäss dem Stand der Technik bekannten und massenhaft in bekannten Maschinen eingesetzten Sensoren benützen z. B. Schwimmkörper, die auf einer Stange gleiten, oder weiche Membranen, die sich entsprechend dem hydrostatischen Druck verformen. Diese Systeme sind jedoch unzuverlässig, da sie unter den erwähnten Nachteilen leiden, nämlich der Empfindlichkeit gegen Säuren und mechanische Kräfte, welche von aussen her einwirken können.

Ferner existieren kapazitive Systeme, die das Wasser als Dielektrikum benützen. Der Unterschied zwischen den Dielektrizitätskonstanten von Luft und von Wasser erlaubt, eine Kapazität zu ermitteln, die zum Wassemiveau im Behälter proportional ist. Solche Systeme sind jedoch unzuverlässig, weil die Dielektrizitätskonstante des Wassers nicht konstant ist, sondern von den im Wasser enthaltenen Verunreinigungen abhängt. Der Gehalt an solchen Verunreinigungen kann ausserordentlich stark variieren.

Der Zweck der vorliegenden Erfindung ist daher, die bekannten Nachteile der heute verwendeten Lösungen zu überwinden und insbesondere einen kapazitiven Niveau-Sensor ohne jegliche bewegte Teile vorzuschlagen, der deshalb dem mechanischen Einfluss der Verunreinigungen nicht unterworfen ist, und welcher der Korrosion durch die im Lebensmittelbereich normalerweise verwendeten sauren Substanzen absolut widersteht. Darüber hinaus muss der erfindungsgemässe Niveau-Sensor von den dielektrischen Eigenschaften der Flüssigkeit absolut unabhängig sein, deren Niveau gemessen werden soll; dies weil das normalerweise zum Waschen verwendete Wasser in jedem Fall immer leitfähig ist und immer ein gewisses Minimum an Leitfähigkeit aufweist, womit das Waschwasser dank dieser Eigenschaft geeignet ist als theoretische Grundlage auf die sich die vorliegenden Erfindung stützt.

Überdies muss der erfindungsgemässe Niveau-Sensor die erwähnte LöffelProbe bestehen und bei geringen Gestehungskosten grosse Zuverlässigkeit aufweisen.

Alle diese Zielsetzungen werden erfüllt mit einem kapazitiven Niveau-Sensor, der die Eigenschaften gemäss dem kennzeichnenden Teil des Anspruch 1 aufweist.

Die vorliegende Erfindung wird im Folgenden unter Bezugnahme auf ein Ausführungsbeispiel näher beschrieben, das in den Abbildungen dargestellt ist. Diese zeigen in der:
- Fig. 1: einen erfindungsgemässen Sensor, der in einen Behälter eines Geschirrspülers oder einer Waschmaschine eingebaut ist, in rein schematischer Darstellung,
- Fig. 2: eine schematische Darstellung des Sensors mit seinen hauptsächlichsten Komponenten, und in der
- Fig. 3: ein Funktionsschema des erfindungsgemässen Sensors.

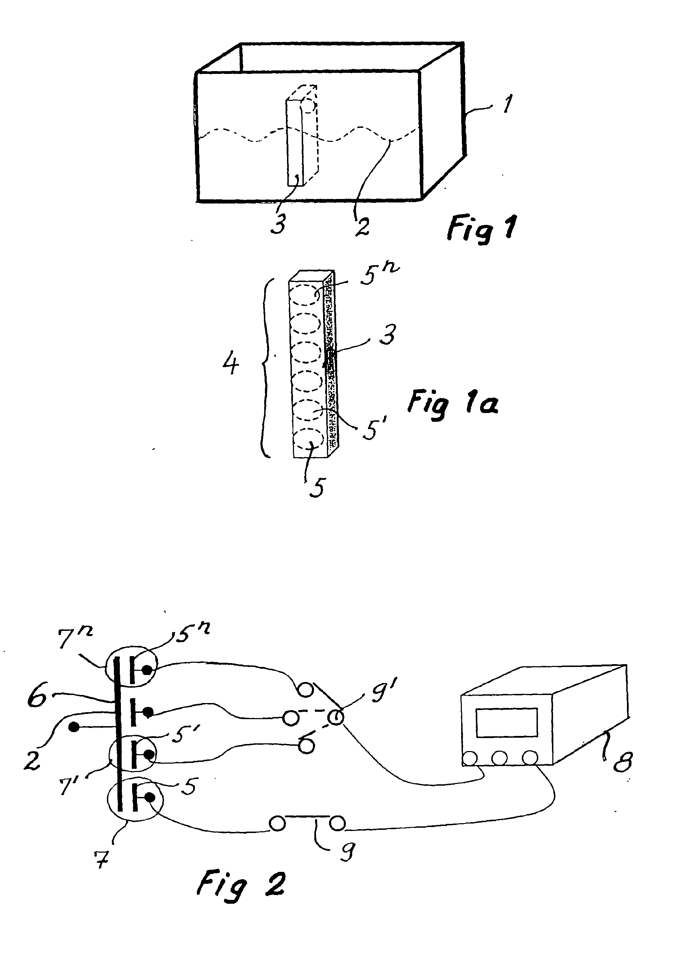

In der Fig. 1 ist ein Behälter aus rostfreiem Stahl mit 1 dargestellt, in welchem sich eine Flüssigkeit 2 befindet, die mit einer gestrichelten Wellenlinie angedeutet ist.

Der Behälter 1 bildet beispielsweise das Waschgefäss eines professionellen Geschirrspülers, und die Flüssigkeit 2 besteht vorzugsweise aus "schmutzigem" Wasser, das sowohl einen Teil der Verunreinigungen enthält, die von den gewaschenen Gegenständen (nicht gezeigt, jedoch in an sich bekannter Weise geeigneten Wasserstrahlen des Waschwassers ausgesetzt) als auch Substanzen, welche das Waschen der Gegenstände erleichtern können, wie beispielsweise Tenside in Form von Seife oder Ähnlichem. Für die Wirkung der vorliegenden Erfindung ist lediglich wichtig, dass die Flüssigkeit 2, bzw. das Wasser das sie repräsentiert, eine elektrische Leitfähigkeit aufweist, welche sie eindeutig von destilliertem Wasser unterscheidet, das den Charakter eines Dielektrikums aufweist. Im Innern des Behälters 1 ist sodann das eigentliche Sensorelement 3 vorhanden, das in vergrössertem Massstab und mit einigen zusätzlichen Details in der Fig. 1 a dargestellt ist.

Der Sensor 3 besteht gemäss einer bevorzugten, gemäss dem Erfindungskonzept aber nicht einzig möglichen Ausführungsform, mit einem Stab 4 aus Kunststoff in welchem Elektroden 5, 5', ... 5ⁿ eingelassen sind, die als metallische Plättchen ausgebildet sind. Der Stab 4 aus Kunststoff ist vertikal im Behälter 1 angeordnet. Der Stab kann vorzugsweise an der Seitenwand des Behälters 1 befestigt sein (siehe Fig. 1), an welcher er mittels einer in der Seitenwand des Behälters 1 eingelassenen Nische befestigt werden kann.

Der Sensor 3 umfasst erfindungsgemäss mindestens zwei Kondensatoren, deren beide Platten auf der einen Seite von einer der Elektroden 5, 5', ... 5ⁿ und auf der gegenüberliegenden anderen Seite von der Flüssigkeit 2 (siehe Fig. 2) gebildet werden, welche also die Funktion einer der beiden Kondensatorplatten 6 und 5 übemimmt, aus denen jeder der Kondensatoren besteht.

Die Anzahl der Elektroden 5, 5', ... 5n, von denen jede eine der Kondensatorplatten der Kondensatoren 7, 7', .... 7ⁿ bildet, entspricht dabei der Anzahl der zu bestimmenden Niveaus der Flüssigkeit 2 im Behälter 1 plus eins, da der Kondensator 7, der sich zuunterst am Stab befindet, einen Referenz-Kondensator darstellt, wie dies im Folgenden bei der Beschreibung der Funktionsweise des erfindungsgemässen Sensors erläutert wird. Die Elektroden 5, 5', ... 5n müssen selbstverständlich gegen die Flüssigkeit 2 isoliert sein, welche die zweite Elektroode bzw. die zweite Kondensatorplatte der Kondensatoren 7, 7', .... 7ⁿ bildet, weshalb die Elektroden 5, 5', ... 5n vollständig im Kunststoff des Stabs 4 eingeschlossen sind, wobei auf der Seite, auf welcher die Elektroden 5, 5', ... 5n angebracht sind, die Dicke des Kunststoffes möglichst dünn gehalten ist, nämlich in der Grössenordnung von einigen Zehntelmillimeter bis höchstens 1 oder 2 Millimeter.

Die erfindungsgemässe Anordnung umfasst ferner ein Messinstrument 8 für die Kapazität, die auch zur Ermittlung des Schwellenwertes dient sowie elektronische Schalter 9 und 9' mittels welchen die einzelnen Elektroden 5, 5', ... 5n einzeln mit dem Messinstrument 8 verbunden werden können.

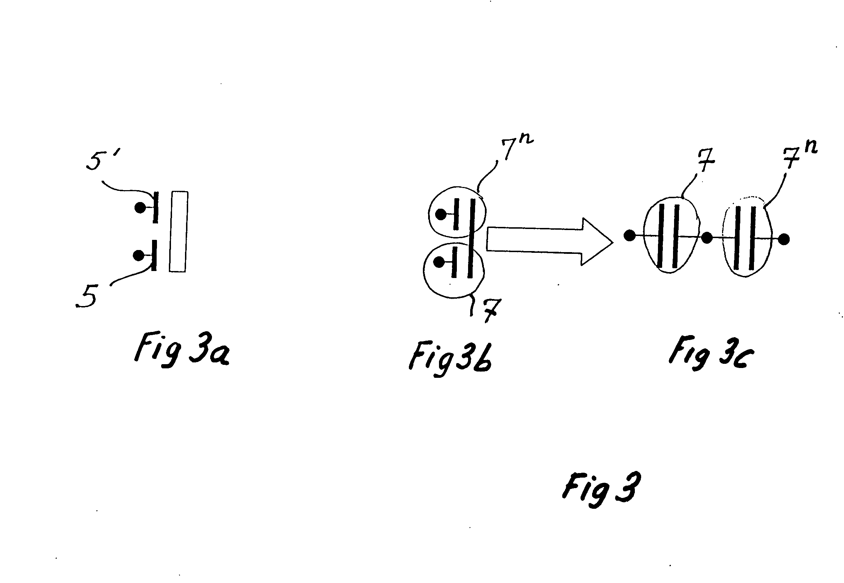

In der Fig. 3 ist gezeigt, wie sich die Situation der einzelnen Kondensatoren darstellt, und genauer in der Fig. 3a, wenn die Flüssigkeit fehlt, welche die zweite Kondensatorplatte darstellt, und in der Fig. 3b, wenn die Flüssigkeit ein genügendes Niveau erreicht hat, auf welchem sie die zweite Kondensatorplatte bilden kann, wobei sodann in der Fig. 3c eine andere Darstellung der gleichen Situation wie in der Fig. 3b gezeigt ist. Die beiden Kondensatoren 7 und 7' sind in Serie verbunden dank dem Vorhandensein der Flüssigkeit 2, welche für beide die zweite Kondensatorplatte bildet.

Der erfindungsgemässe Sensor funktioniert wie folgt:
Das elektronische Kapazitäts-Messgerät 8, dessen Konstruktion jedem Fachmann auf dem Gebiet wohlvertraut ist und daher hier nicht weiter in ihren Einzelheiten zu erläutern ist, misst die Kapazität zwischen der Referenzelektrode 5 des untersten Kondensators 7 und einer der andern Elektroden 5, 5', ... 5ⁿ der Kondensatoren 7' .... 7ⁿ, welche die Messkondensatoren bilden. Dieser Vorgang wiederholt sich mit Hilfe des elektronischen Schalters 9' für alle Messelektroden 5' bis 5ⁿ, die auf den verschiedenen Höhenlagen angeordnet sind, die hier von Interesse sind. Wenn die Flüssigkeit 2 zwischen den beiden verglichenen Elektroden (nämlich zwischen der Referenzelektrode 5 und einer der Messelektroden 5' oder 5", oder .... 5ⁿ) fehlt, wird eine kleine Kapazität gemessen, die der Kapazität zwischen den Elektroden entspricht. Ist hingegen die (leitende) Flüssigkeit 2 vorhanden (Fig. 3b bzw. Fig. 3c) steigt die Kapazität zwischen der Referenzelektrode 5 und jener "eingetauchten" 5' oder 5" oder .... 5ⁿ beträchtlich, weil die Flüssigkeit 2 wie eine metallische Kondensatorplatte wirkt, die auf der Seite gegenüber jener der Elektroden eingebracht wird, wobei wie bereits erwähnt, die von der Flüssigkeit gebildete Kondensatorplatte gegen die Elektroden 5, 5", .... 5ⁿ dank der Wirkung des Kunststoffbehälters isoliert ist. Damit erhält man wie vermerkt die dargestellte elektrische Auslegung mittels der Reihe von zwei Kondensatoren, wie sie in der Fig. 3c dargestellt ist.

Der erfindungsgemässe Sensor arbeitet, und dies ist seine wichtige Funktions-Eigenschaft, vollständig unabhängig von den dielektrischen Eigenschaften der Flüssigkeit 2, deren Niveau im Behälter 1 zu messen ist. Wird mittels geeigneter Eichung des Messinstrumentes 8 ein Schwellenwert der Kapazität festgesetzt, oberhalb welchem das Vorhandensein des Wassers auf diesem Niveau angenommen wird, so erhält man eine abgestufte Niveau-Messung. Damit wird jede Möglichkeit von Falschanzeigen des Flüssigkeitsstandes ausgeschaltet, wobei auch dem Umstand Rechnung getragen wird, dass das normalerweise im Waschprozess verwendete Wasser immer leitfähig ist oder mindestens eine genügende Leitfähigkeit aufweist, um als Kondensatorplatte 6 eines der Kondensatoren 7, 7', ... 7ⁿ dienen zu können.

Die Vorteile des erfindungsgemässen Sensors sind einleuchtend. Das Fehlen jeglicher bewegter Teile verunmöglicht Funktionsstörungen infolge Ablagerung von Verunreinigungen, wie sie bei den bisher bekannten Sensoren auftraten. Da der ganze Sensor in Kunststoff eingelassen werden kann, sind femer die schädlichen Einflüsse der sauren Substanzen wirkungslos, die normalerweise im Lebensmittelbereich im Waschwasser verwendet werden, um bessere Waschresultate mit Geschirr, oder mit Geweben in Waschmaschinen, zu erreichen.

Auch die berüchtigte Löffelprobe, die im Bereich der Geschirrspüler oft angewendet wird, und die darin besteht, einen Löffel auf den Niveau-Sensor fallen zu lassen, um zu sehen ob dieser beschädigt wird, übersteht der erfindungsgemässe Sensor mit Leichtigkeit. Der erfindungsgemässe Sensor, der im Wesentlichen aus einem Stäbchen aus Kunststoff besteht, kann den Aufschlag eines solchen Stosses ohne weiteres ertragen.

Ferner ist die elektronische Schaltung des Messgerätes einfach und wirtschaftlich günstig, wobei die praktische Ausführung jedem Fachmann auf dem Gebiet möglich ist, da die Technik der Kapazitätsmessung im Bereich zwischen einigen zehn pF und einigen nF allgemein bekannt und gebräuchlich ist.

Dasselbe gilt für den elektronischen Schalter 9', der den Mess-Schaltkreis auf die verschiedenen Elektroden 5, 5', ... 5ⁿ umschaltet und die Kontrolle bezüglich des Schwellenwertes aufgrund der Kapazitätsunterschiede zwischen Luft und Wasser ausführt.

Der als rechteckiges Stäbchen aus Kunststoff dargestellte erfindungsgemässe Sensor mit darin eingebetteten Elektroden 5, 5', ... 5ⁿ, die in Form von Metallplättchen vorzugsweise als runde Scheibchen mit einem Durchmesser zwischen 5 und 20 mm und einer Dicke zwischen 0.2 und 2 mm ausgebildet sind, stellt eine bevorzugte Ausführungsform der vorliegenden Erfindung dar, die sich insbesondere zum Einbau in den Behälter professioneller Geschirrspüler eignet. Die vorliegende Erfindung lässt aber unzählige Varianten der geometrischen Ausbildung des Sensors aus Kunststoff zu, entsprechend den Anwendungen, die ins Auge gefasst werden können. Wesentlich ist hingegen bloss, dass die Flüssigkeit 2, deren Niveau im Behälter 1 zu messen ist, leitfähig ist und deshalb die Rolle einer der Kondensatorplatten 6 übemehmen kann, aus denen jeder der den Sensor bildenden Kondensatoren 5, 5', ... 5ⁿ besteht. Alle andern Eigenschaften der Konstruktion des Sensors lassen sich an den vorgesehenen Anwendungszweck anpassen.

Die Praxis hat erwiesen, dass einer der bevorzugten Anwendungsbereiche des erfindungsgemässen Sensors jener ist, bei welchem der Behälter 1 der Behälter eines Geschirrspülers oder einer Waschmaschine ist, in Modellen für den Haushalt oder für professionellen Einsatz, oder in Grossanlagen, bei denen die Zuverlässigkeit der Funktion eine ganz besonders wichtige Rolle spielt.

### Liste der in den Figuren verwendeten Bezugsziffern

- 1: Behälter
- 2: Flüssigkeit
- 3: Sensor
- 4: Kunststoffstab
- 5: Elektrode (5, 5'... 5ⁿ)
- 6: Kondensatorplatte = Flüssigkeit
- 7: Kondensator (7, 7', ... 7ⁿ)
- 8: Messinstrument
- 9,9': Schalter

## Patentansprüche

1. Kapazitiver Niveau-Sensor bestehend aus mindestens zwei Kondensatoren (7, 7') zur Bestimmung des Niveaus des Flüssigkeitsstandes in einem Behälter (1),
**dadurch gekennzeichnet, dass**
die Flüssigkeit (2) elektrisch leitfähig ist und die Funktion einer der Kondensatorplatten (6) der mindestens zwei Kondensatoren (7, 7') übemimmt, während die andere Kondensatorplatte von einer metallischen Elektrode (5, 5', ... 5ⁿ) gebildet wird.

2. Sensor gemäss dem Anspruch 1,
**dadurch gekennzeichnet, dass**
der Sensor (3) aus einer Mehrzahl von Kondensatoren (7, 7', ... 7ⁿ) besteht, die vertikal übereinander angeordnet sind, wobei der zuunterst angeordnete Kondensator (7) den Referenz-Kondensator bildet, und wobei die Anzahl der Kondensatoren (7, 7', ... 7ⁿ) bzw. der Elektroden (5, 5', ... 5ⁿ), die eine der Kondensatorplatten der Kondensatoren (7, 7', ... 7ⁿ) bilden, der Anzahl der zu bestimmenden Niveau-Höhen der Flüssigkeit (2) im Behälter (1) plus eins entspricht.

3. Sensor gemäss dem Anspruch 2,
**dadurch gekennzeichnet, dass**
die Elektroden (5, 5', ... 5ⁿ) im Innern eines Kunststoffstabes (4) eingelassen sind und als runde Scheiben ausgebildet sind, die der Seite des Stabes zugewendet sind, die von der Flüssigkeit (2) benetzt wird, von der sie jedoch durch eine dünne Kunststoffwand getrennt bzw. elektrisch isoliert sind, wobei der Kunststoffstab (4) vertikal im Behälter (1) in solcher Weise angebracht ist, dass sich die Kondensatoren (7, 7', ... 7ⁿ) auf den Höhen befinden, die den zu bestimmenden Niveaus der Flüssigkeit (2) entsprechen.

4. Sensor gemäss dem Anspruch 3,
**dadurch gekennzeichnet, dass**
der Kunststoffstab (4) an der Seitenwand des Behälters (1) aus Stahl einer Nische festgehalten ist, die in der Seitenwand des Behälters (1) eingelassen ist.

5. Sensor gemäss dem Anspruch 1,
**dadurch gekennzeichnet, dass**
die Flüssigkeit (2) aus elektrisch leitfähigem Wasser besteht, da sie als Waschwasser verwendet wird und deshalb Verunreinigungen enthält wie Speiseresten und/oder Tenside wie Seife, usw., die genügende Leitfähigkeit vermitteln, so dass sie als Kondensatorplatte (6) eines elektrischen Kondensators (7) wirken kann.

6. Sensor gemäss dem Anspruch 3,
**dadurch gekennzeichnet, dass**
die Elektroden (5, 5', ... 5ⁿ) als metallische Plättchen in Form runder Scheiben mit einem Durchmesser von 5 bis 20 mm ausgebildet sind.

7. Sensor gemäss dem Anspruch 6,
**dadurch gekennzeichnet, dass**
die Scheiben eine Dicke zwischen 0.5 und 2 mm aufweisen.

8. Sensor gemäss einem der Ansprüche 1 bis 7,
**dadurch gekennzeichnet, dass**
der Behälter (1) der Waschbehälter eines Geschirrspülers oder einer Waschmaschine für den Haushalt oder für professionelle Verwendung ist.
